(19) Europäisches Patentamt

European Patent Office

Office européen des brevets

(11) **EP 1 626 265 A1**

(12) **EUROPEAN PATENT APPLICATION**
published in accordance with Art. 158(3) EPC

(43) Date of publication:
**15.02.2006 Bulletin 2006/07**

(51) Int Cl.:
*G01N 21/05* (1980.01)          *H01M 8/02* (1974.07)
*H01M 8/04* (1974.07)

(21) Application number: **04728709.9**

(22) Date of filing: **21.04.2004**

(86) International application number:
**PCT/JP2004/005736**

(87) International publication number:
**WO 2004/097379 (11.11.2004 Gazette 2004/46)**

(84) Designated Contracting States:
**DE FR GB**

(30) Priority: **28.04.2003 JP 2003123048**

(71) Applicant: **ALPS ELECTRIC CO., LTD.**
**Tokyo 145-8501 (JP)**

(72) Inventor: **ARASAWA, Ryu,**
**c/o ALPS ELECTRIC CO., LTD,**
**Tokyo 145-8501 (JP)**

(74) Representative: **Klunker . Schmitt-Nilson . Hirsch**
**Winzererstrasse 106**
**80797 München (DE)**

(54) **CONCENTRATION MEASURING OPTICAL MEMBER AND CONCENTRATON MEASURING UNIT EQUIPPED WITH THIS OPTICAL MEMBER AND FUEL CELL**

(57)    An optical member for measuring a concentration, the optical member being capable of measuring with high accuracy from low concentration to high concentration, and the like are provided.

Light (P1) emitted from a light source (P) for inspection is refracted at a boundary surface between an emitting surface (11b) of a first optical element (11) and a substance (7) to be measured, the substance circulating in a path (15), by an angle ($\theta_2$) of refraction depending on the concentration (refractive index) of the substance (7) to be measured. Furthermore, when the light is incident on a second optical element (12), the light is refracted to light (P3) parallel to a reference optical axis (O-O). When the light (P3) is emitted from the second optical element (12) to the outside, the light (P3) is further greatly refracted by magnifying means (16) provided on an emitting surface (12b) of the second optical element (12).

FIG. 1

**Description**

Technical Field

The present invention relates to an optical member for measuring the concentration of a substance to be measured, in particular, to an optical member for measuring the concentration that can be mounted in a direct methanol fuel cell or the like and that can measure with high accuracy throughout a range from low concentration to high concentration, a concentration measurement unit including the optical member, and a fuel cell including the concentration measurement unit.

Background Art

Recently, direct methanol fuel cells (DMFCs) that directly use methanol as the fuel without reforming have been actively studied on the basis of a technology of solid polymer electrolyte fuel cells (PEFCs), which have been rapidly developed.

Since the DMFCs do not require a hydrogen container or a reformer, the DMFCs are compact, are activated quickly, and have excellent responsiveness to load fluctuation. Therefore, the application of the DMFCs to portable power sources for automobiles, electronic equipment, or the like is expected.

The DMFCs have almost the same structure as that of the PEFCs. At the anode side provided in a power generation unit, methanol is reacted with water to generate hydrogen ions, electrons, and carbon dioxide. The resulting hydrogen ions move in a solid polymer electrolyte membrane and are bonded to oxygen and electrons at the cathode side to generate water. Thus, current flows between the anode and the cathode.

The concentration of the fuel in such known DMFCs is set to a range from about 3% to about 6%, which is suitable for achieving the performance, resulting in the following problem: In view of energy density, the size of a fuel tank tends to increase, and thus it is difficult to reduce the size of the fuel cell as a whole.

In contrast, the use of high-concentration methanol decreases the power generation efficiency and the output voltage of DMFCs becomes disadvantageously unstable. However, since such a high concentration fuel has high volume energy density, the volume of the fuel can be significantly reduced. For example, the volume of a fuel tank can be reduced to 1/10 or less, as compared with the case where the concentration is 3% to 6%.

Accordingly, preferably, high-concentration methanol is used as a fuel and is diluted so as to have the optimum concentration at the stage in which the high-concentration methanol is supplied to a power generation unit. In such a case, a compact fuel cell having excellent power generation efficiency can be provided.

Hitherto, as a unit for measuring the concentration of a substance to be measured, a technology disclosed in, for example, the patent document of Japanese Unexamined Patent Application Publication No. 11-281574 is present. The concentration measurement unit (refractive index densitometer) described in the above patent document utilizes the following phenomenon: Light incident on a triangular prism 13 from a light source 14 is divided into two components, i.e., a transmitted light component and a reflected light component, at the boundary surface between the triangular prism 13 and a substance 7 to be measured. When the reflected light component is received with a photo detector 22, the boundary position of light and shade of the reflected light component is moved depending on the refractive index of the substance 7 to be measured. The change in the boundary position of light and shade is detected as the change in the quantity of light received at the photo detector 22, thereby determining the concentration of the substance 7 to be measured.

However, in the above refractive index densitometer, as shown in Fig. 6 (see Patent Document 1) showing the measurement results, at higher concentration of the substance to be measured, the output value of the photo detector tends to decrease, and at lower concentration, the output value tends to decrease. In other words, as the concentration of the substance to be measured increases, the refractive index of the substance to be measured increases, thereby also increasing the critical angle. As a result, the ratio of the reflected light component decreases and the ratio of the transmitted light component increases. Thus, the total quantity of light (reflected light component) provided to the photo detector decreases. Consequently, the boundary position (border line) of light and shade easily blurs at the area with high concentration, and thus the detection accuracy disadvantageously decreases. Accordingly, in order to accurately detect the boundary position of light and shade and to detect the concentration with high accuracy, an expensive photo detector having excellent light-receiving sensitivity is necessary.

In addition, since the above refractive index densitometer utilizes the property of total reflection of light, it is essential that the refractive index (n1) of the triangular prism is larger than the refractive index (n2) of the substance to be measured (n1 > n2). In general, as the concentration of a substance to be measured increases, the refractive index of the substance tends to increase. Therefore, the concentration that can be measured by the refractive index densitometer is limited to the case where the refractive index of the substance to be measured is smaller than the refractive index of the triangular prism. In other words, the concentration that can be measured by the above refractive index densitometer is limited to low concentrations and the measurement for high concentration has a limit.

In order to solve the above problems, it is an object of the present invention to provide an optical member that can measure the concentration of a substance to be measured with high accuracy throughout a range from low concentration to high concentration and a concentration measurement unit including the optical member.

Also, it is an object of the present invention to provide a fuel cell including the concentration measurement unit having an improved power generation efficiency and capable of supplying a stable voltage.

Disclosure of Invention

According to the present invention, an optical member includes a path through which a substance to be measured passes;

a first optical element including an incident surface on which light for inspection is incident and an emitting surface facing the path; a second optical element including an incident surface facing the path and an emitting surface from which the light is emitted; and

magnifying means that magnifies the distance between an emitting optical axis of light transmitting through the first optical element, being refracted by the substance to be measured in the path, and transmitting through the second optical element; and an incident optical axis of the light for inspection.

The diffraction means is preferably a plurality of irregular grooves or slits.

The optical member and a concentration measurement unit including the optical member of the present invention utilize a phenomenon that an angle of refraction when light for inspection is incident from the first optical element to the substance to be measured is changed depending on the concentration of the substance to be measured.

That is, the optical axis of light transmitting through the second optical element is shifted from the optical axis (reference optical axis) of the light for inspection because of the above refraction. Accordingly, the concentration of the substance to be measured can be measured by detecting the amount of the shift. However, since the amount of shift is slight, the concentration of the substance to be measured determined from the amount of shift may include a large error.

Consequently, in the present invention, the amount of shift is magnified with magnifying means and is then measured. Thereby, the effect by the error of measurement is suppressed, and thus the concentration of the substance to be measured can be measured with high accuracy.

In this case, the magnifying means is preferably diffraction means such as a plurality of irregular grooves or slits.

The magnifying means is preferably provided so as to be integrated with the emitting surface of the second optical element.

In the above means, the magnifying means need not be separately provided. Therefore, the production cost can be reduced and the miniaturization can also be achieved.

Also, the emitting surface of the first optical element and the emitting surface of the second optical element may be parallel to each other and tilted with respect to the axial direction of the incident optical axis of the light for inspection.

Furthermore, a concave surface is preferably provided so as to be integrated with the incident surface of the first optical element.

In the above means, since the beam diameter of the light for inspection irradiated from a light source can be converged, the accuracy of measurement can be further improved. In addition, an expensive laser component need not be used, and thus the production cost can be reduced.

A concentration measurement unit of the present invention includes the optical member described in any one of the above, a light-emitting element for allowing light for inspection to be incident on the incident surface of the first optical element, and a photo detector for receiving the light transmitted through the magnifying means.

In the above invention, forming the unit can achieve the miniaturization.

In the above unit, an inflow port for supplying the substance to be measured to the path may be provided at one end of the path formed between the first optical element and the second optical element, and an outflow port for discharging the substance to be measured from the path may be provided at the other end.

In the above means, piping to the inflow port and piping to the outflow port can circulate the substance to be measured in the path.

According to a fuel cell including the concentration measurement unit of the present invention, in a fuel cell in which power is generated by a power generation unit including an anode, a cathode facing the anode, and an electrolyte membrane disposed therebetween; by supplying an organic fuel to the anode side; and by supplying an oxidizing agent gas to the cathode side,

the organic fuel is supplied to the anode side via a path provided in the concentration measurement unit described above.

In this case, the inflow port of the optical member may be connected to a fuel tank of the organic fuel and the outflow port of the optical member may be connected to the cathode side of the power generation unit.

The above invention can achieve the miniaturization of the fuel cell. Furthermore, since the concentration of the organic fuel supplied to the power generation unit can be controlled to be constant, the efficiency of power generation can be improved and the output voltage of the fuel cell can be stabilized.

Brief Description of the Drawings

Fig. 1 is a plan view showing an optical member for measuring a concentration according to an embodiment of the present invention.
Fig. 2 is a graph showing the relationship between the concentration [wt%] of an aqueous solution of methanol and the refractive index.
Fig. 3 is a partially enlarged view of Fig. 1, the view explaining a distance $\Delta y1$ from a reference optical axis.
Fig. 4 is a cross-sectional view showing a concentration measurement unit using the optical member in Fig. 1.
Fig. 5 is a block diagram showing a circulating system of a fuel cell equipped with the concentration measurement unit.

Best Mode for Carrying Out the Invention

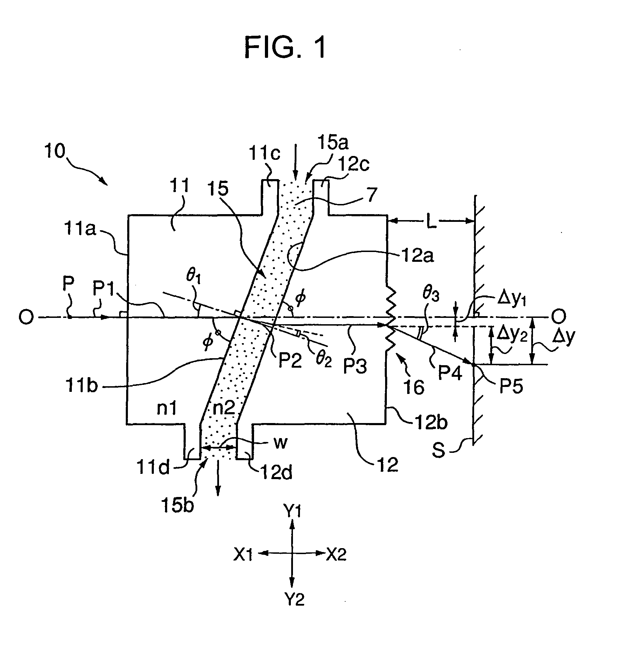

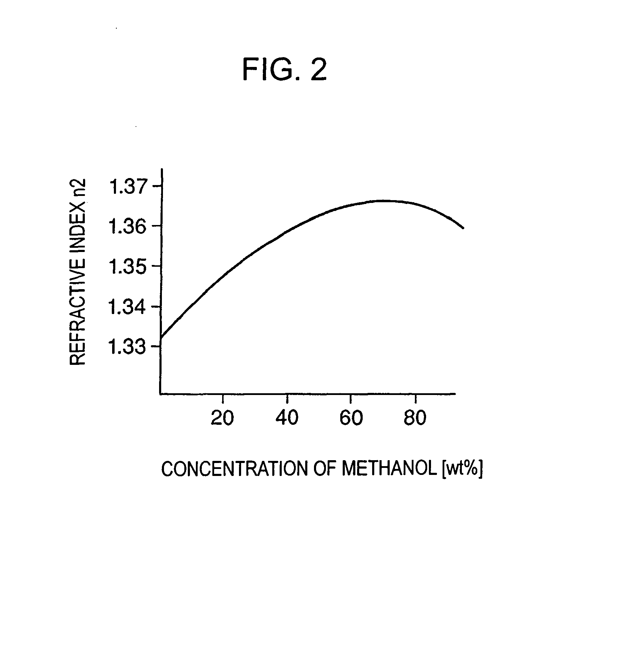

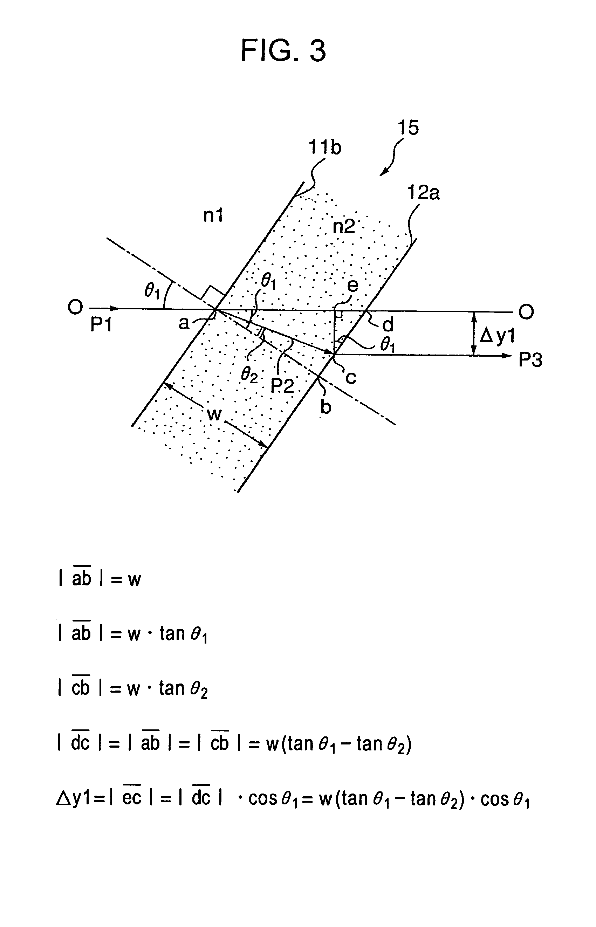

Fig. 1 is a plan view showing an optical member for measuring a concentration according to an embodiment of the present invention, Fig. 2 is a graph showing the relationship between the concentration [wt%] of an aqueous solution of methanol and the refractive index in the case where the substance to be measured is a mixed solution of water and methanol (aqueous solution of methanol), and Fig. 3 is a partially enlarged view of Fig. 1, the view explaining a distance $\Delta y1$ from an optical axis. Symbol O-O shown in Fig. 1 represents a reference optical axis. Irradiation is performed from the side of X1 to the side of X2 shown in the figure while the optical axis (incident optical axis) of a light source for inspection corresponds to the reference optical axis O-O.

An optical member 10 for measuring a concentration shown in Fig. 1 includes a first optical element 11 and a second optical element 12. The first optical element 11 and the second optical element 12 form a prism composed of transparent glass, an acryl, or the like. The first optical element 11 includes an incident surface 11a provided at the side of X1 in the figure in the direction perpendicular to the reference optical axis O-O and an emitting surface 11b provided at the side of X2 in the figure in the direction tilted by a predetermined angle $\phi$ of inclination with respect to the reference optical axis O-O. The second optical element 12 includes an incident surface 12a provided at the side of X1 in the figure in the direction tilted by the predetermined angle $\phi$ of inclination with respect to the reference optical axis O-O and an emitting surface 12b provided at the side of X2 in the figure in the direction perpendicular to the reference optical axis O-O. Magnifying means 16 is provided on the emitting surface 12b of the second optical element 12. An example of the magnifying means 16 is diffraction means composed of a plurality of irregular grooves or slits. The magnifying means 16 is provided on the optical path of light emitted from the emitting surface 12b of the second optical element 12.

An opposing piece 11c and an opposing piece 11d each protruding from the emitting surface 11b in the Y1 direction and in the Y2 direction in the figure, respectively, are provided on the sides of the first optical element 11. Similarly, an opposing piece 12c and an opposing piece 12d each protruding from the emitting surface 12b in the Y1 direction and in the Y2 direction in the figure, respectively, are provided on the sides of the second optical element 12.

The first optical element 11 and the second optical element 12 face each other so that the space between the emitting surface 11b and the incident surface 12a has a certain width dimension w, and this space forms a path 15. In other words, the emitting surface 11b forms one surface (at the X1 side) of the path 15, and the incident surface 12a forms another surface (at the X2 side) of the path 15. The opposing piece 11c and the opposing piece 12c form an inflow port 15a of the path 15, and the opposing piece 11d and the opposing piece 12d form an outflow port 15b of the path 15.

A method for measuring the concentration of a substance to be measured, such as an organic fuel (for example, methanol), with the optical member 10 will now be described. In the following description, n1 represents the refractive index of the first optical element 11 and the second optical element 12, $\theta_1$ represents an angle of incidence when light transmitted through the first optical element 11 is incident on the emitting surface 11b, $\theta_2$ represents an angle of refraction on a substance 7 to be measured, n2 represents the refractive index of the substance 7 to be measured, and $\theta_3$ represents an angle of refraction (angle of emission) of light emitted from the magnifying means 16.

The concentration of the substance 7 to be measured is measured while the substance 7 to be measured circulates in the path 15 from the inflow port 15a to the outflow port 15b.

A light source P for inspection is provided at the side of X1 in the figure. When linear light (for example, a laser beam) P1 is radiated from the light source P in the X2 direction in the figure, the light P1 is incident on the incident surface 11a of the first optical element 11 perpendicularly while the optical axis (incident optical axis) of the light (light for inspection) P1 corresponds to the reference optical axis O-O. The light P1 is transmitted through the first optical element 11 and enters the substance 7 to be measured. The light P1 passes through the boundary surface between the emitting surface 11b of the first optical element 11 and the substance 7 to be measured and is incident on the substance 7 to be measured. Here, according to the Snell's law, the angle $\theta_2$ of refraction of light P2 incident on the substance 7 to be measured is represented by the following equation:

$$\theta_2 = \sin^{-1}(\frac{n1}{n2} \cdot \sin \theta_1)$$

However, as shown in Fig. 2, the refractive index n2 of the substance 7 to be measured depends on the concentration of the substance 7 to be measured. Therefore, when the concentration is changed, the angle $\theta_2$ of refraction of the light P2 incident on the substance 7 to be measured is changed accordingly.

The refractive index n2 shown in Fig. 2 represents a relative refractive index when the refractive index of air is defined as 1.00.

The light P2 crossing the path 15 (i.e., the light P2 passing through the substance 7 to be measured) is incident from the incident surface 12a of the second optical element 12 to the inside of the second optical element 12. Here, since the refractive index of the second optical element 12 is n1, which is the same as the refractive index of the first optical element 11, the optical axis of light P3 transmitting through the second optical element 12 is parallel to the above optical axis O-O (or the light P1). However, as shown in Fig. 1, the optical axis of the light P3 is shifted by a distance $\Delta y1$ in the Y2 direction in the figure parallel to the optical axis O-O.

As shown in Fig. 3, the distance $\Delta y1$ is represented with the width dimension w of the path 15 and the angle $\theta_2$ of refraction by the following equation:

$$\Delta y1 = w \cdot (\tan\theta_1 - \tan\theta_2) \cdot \cos\theta_1$$

The light P3 passing straight in the second optical element 12 in the X2 direction in the figure is emitted from the emitting surface 12b of the second optical element 12 to the outside. Since the magnifying means 16 is provided on the emitting surface 12b, light P4 is emitted to the outside while being greatly refracted.

When a screen (light-receiving surface of a photo detector) S is provided perpendicular to the above reference optical axis O-O at a position away from the emitting surface 12b by a predetermined distance L in the X2 direction, the light P4 forms a light spot P5 on the screen S. In this case, a distance $\Delta y2$ in the Y2 direction of the light spot P5 (emitting optical axis of the light P4) relative to the optical axis of the light P3 is represented by the following equation:

$$\Delta y2 = L \cdot \tan\theta_3$$

Accordingly, by using the above equations 1 to 3, the total distance $\Delta y$ (= $\Delta y1$ + $\Delta y2$) from the reference optical axis O-O is represented by equation 4:

$$\Delta y = \Delta y1 + \Delta y2$$
$$= w \cdot (\tan\theta_1 - \tan\theta_2) \cdot \cos\theta_1 + L \cdot \tan\theta_3$$
$$= w \cdot (\tan\theta_1 - \tan[\sin^{-1}(\frac{n1}{n2} \cdot \sin \theta_1)]) \cdot \cos\theta_1$$
$$+ L \cdot \tan\theta_3$$

That is, the magnifying means 16 has a function of magnifying the distance $\Delta y1$ to the total distance $\Delta y2$.

Since w, n1, and $\theta_1$ in equation 4 are constants, the total distance $\Delta y$ is changed depending on the refractive index n2 of the substance 7 to be measured. In addition, as described above, there is a relationship that the refractive index n2 is changed depending on the concentration of the substance 7 to be measured.

Accordingly, when the total distance $\Delta y$ of the light spot P5 (emitting optical axis of the light P4) is known, the refractive index n2 of the substance 7 to be measured, i.e., the concentration thereof can be determined.

Specifically, the relationship between the total distance $\Delta y$ and the concentration of the substance 7 to be measured, the relationship being determined by a measurement, is previously stored as data. When an actual measurement is performed using the optical member 10 for measuring a concentration, data corresponding to the measured total distance $\Delta y$ is selected. Thereby, the concentration of the substance 7 to be measured can be determined.

Furthermore, since the refractive index n2 is easily affected by the temperature of the substance 7 to be measured, a difference in temperature may also cause a fluctuation of the total distance $\Delta y$. Therefore, for example, at every temperature the relationship between the total distance $\Delta y$ and the concentration of the substance 7 to be measured is preferably stored as data. Alternatively, data for temperature calibration may be prepared in advance. A measured raw total distance $\Delta y$ may be calibrated with the data for temperature calibration and the concentration may then be determined.

The concentration of the substance 7 to be measured can be measured in the same manner by measuring the distance $\Delta y1$ represented by equation 2. However, the distance $\Delta y1$ is smaller than the distance $\Delta y2$. As is particularly apparent from Fig. 2, equation 1, and equation 2, since the variation in the refractive index n2 is slight, the distance $\Delta y1$ is also slight. Therefore, if the slight distance $\Delta y1$ includes a slight error of measurement, the accuracy of measurement of the concentration of the substance 7 to be measured may be decreased. In contrast, the distance $\Delta y2$ is obtained by substantially magnifying the slight distance $\Delta y1$. Therefore, even if a measured distance $\Delta y2$ includes such an error of measurement, the effect of such an error can be reduced. Consequently, the accuracy of measurement of the concentration in the optical member 10 for measuring a concentration is not decreased.

Accordingly, a photo detector with high accuracy need not be used as the photo detector to be provided at the position of the screen S. Thus, an inexpensive photo detector can be used.

The magnifying means 16 is provided so as to be integrated with the emitting surface 12b of the second optical element 12, but is not limited to this. Alternatively, the magnifying means 16 may be separately provided at a position between the emitting surface 12b of the second optical element 12 and the screen (light-receiving surface of a photo detector) S and on the optical path of the light P3. However, as described above, when the magnifying means 16 is formed so as to be integrated with the emitting surface 12b of the second optical element 12, the number of components can be reduced, compared with the case where the magnifying means 16 is provided as a separate component. Consequently, the production cost can be reduced.

Furthermore, unlike the refractive index densitometer described in Patent Document 1, the optical member of the present invention does not utilize the property of total reflection but utilizes transmitted light transmitting the boundary surface between the emitting surface 11b of the first optical element 11 and the substance 7 to be measured. Therefore, the relationship between the refractive index n1 of the first optical element 11 and the refractive index n2 of the substance 7 to be measured need not satisfy n1 > n2.

In the case of n1 s n2 (high concentration), since the total reflection does not occur, the light P1 passing straight in the first optical element 11 can transmit the above boundary surface.

Even in the case of n1 > n2 (low concentration), when the angle $\theta_1$ of incidence of the light P1 is smaller than the critical angle, the light P1 can transmit the boundary surface.

The critical angle $\theta_c$ in the case of n1 > n2 is specified by equation 5:

$$\theta_c = \sin^{-1} \frac{n2}{n1}$$

When the concentration of the substance 7 to be measured is low, the refractive index n2 is decreased and thus the critical angle $\theta_c$ is also decreased. Accordingly, when the concentration of the substance 7 to be measured is low, the relationship of critical angle $\theta_c$ > angle $\theta_1$ of incidence is not always maintained. Therefore, it is assumed that a case where the light P1 does not transmit the boundary surface may be present.

However, the setting of the angle $\theta_1$ of incidence depends on the angle $\phi$ of inclination of the incident surface 11a of the first optical element 11. Therefore, when the incident surface 11a is formed such that the angle $\phi$ of inclination is as large as possible, the above relationship of critical angle $\theta_c$ > angle $\theta_1$ of incidence can be maintained. Accordingly, even in a case of low concentration, the light P1 can transmit the boundary surface. Consequently, the optical member 10 according to the present invention can measure the concentration of the substance 7 to be measured with high accuracy throughout a range from low concentration to high concentration.

The first optical element 11 and the second optical element 12 may be integrated with each other. In such a case, the cross-section of the path 15 may be a rectangular through-hole. This integration allows the optical element to be formed more inexpensively. In addition, the parallel accuracy between the emitting surface 11b and the incident surface 12a can be further improved.

A concentration measurement unit will now be described.

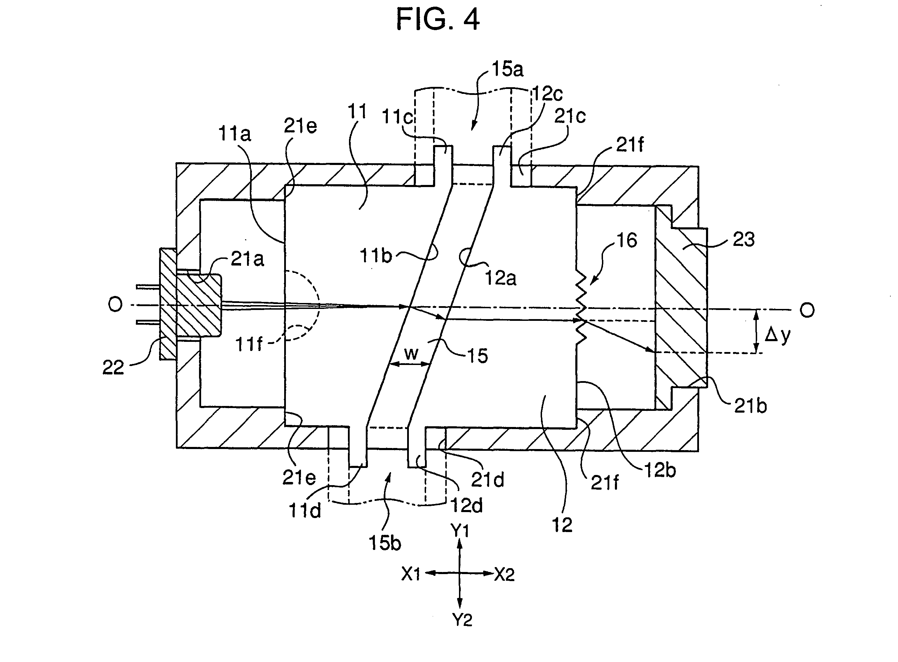

Fig. 4 is a cross-sectional view showing a concentration measurement unit using the optical member in Fig. 1. A concentration measurement unit 20 shown Fig. 4 includes a housing 21 and the optical member 10 for measuring a concentration, the optical member 10 being provided inside of the housing 21. The housing 21 is composed of a synthetic resin. An attachment hole 21a is provided at one end face (at the side of X1 in the figure) of the housing 21. A light-emitting element 22 functioning as a light source for inspection is fixed in the attachment hole 21a. Another attachment hole 21b is provided at the other end face (at the side of X2 in the figure) of the housing 21. A photo detector 23 is fixed in the attachment hole 21b.

The light-emitting element 22 is, for example, a light-emitting diode having excellent directional characteristics, and more preferably a semiconductor laser diode capable of outputting linear light. The photo detector 23 is, for example, a photo diode, a semiconductor position sensitivity diode (PSD), or a charge couple device (CCD).

When the linearity obtained by only the directional characteristics of the light irradiated from the light-emitting element 22 is low and thus the accuracy of measurement of the total distance $\Delta y$ (the accuracy of measurement of the concentration) is not satisfactory, as shown in Fig. 4, a spherical concave surface 11f is preferably formed on the incident surface 11a of the first optical element 11. In this case, since the concave surface 11f serves as a lens, the beam diameter of light emitted from the light-emitting element 22 while being diffused can be converged, thereby improving the accuracy of measurement of the total distance $\Delta y$.

Also, when a convex lens is disposed between the light-emitting element 22 and the incident surface 11a of the first optical element 11, the light can be converged. However, as described above, when the concave surface 11f is provided so as to be integrated with the incident surface 11a of the first optical element 11, the convex lens, which must be provided as a separate member, is not necessary. Thus, the production cost can be reduced.

Openings 21c and 21d are provided on both side faces in the Y direction in the figure of the housing 21. Stepped portions 21e and 21f are provided on the inner wall of the housing 21. With respect to the first optical element 11 and the second optical element 12, which form the optical member 10, both the opposing piece 11c and the opposing piece 12c are inserted in the opening 21c, and the opposing piece 11d and the opposing piece 12d are inserted in the opening 21d. Both sides of the incident surface 11a of the first optical element 11 are fixed in position on the stepped portions 21e of the housing 21 with a binding material. Similarly, both sides of the emitting surface 12b of the second optical element 12 are fixed in position on the stepped portions 21f of the housing 21. Consequently, the emitting surface 11b of the first optical element 11 and the incident surface 12a of the second optical element 12 face in parallel as a whole with a certain width dimension w therebetween.

The housing 21 in which the optical member 10, the light-emitting element 22, and the photo detector 23 are integrated is sealed with a cover, which is not shown in the figure, thereby completing the assembly of the concentration measurement unit 20. In the concentration measurement unit 20, the space between the emitting surface 11b of the first optical element 11 and the incident surface 12a of the second optical element 12 is sealed from four directions with bottom plates of the housing 21 and the cover, which is not shown in the figure, to form the path 15. Consequently, a substance 7 to be measured can circulate from the inflow port 15a formed by the opposing pieces 11c and 12c to the outflow port 15b formed by the opposing pieces 11d and 12d.

The light-emitting element 22 irradiates light to the photo detector 23, while the substance 7 to be measured circulates through the path 15 of the concentration measurement unit 20. Thus, the photo detector 23 can detect the total distance $\Delta y$ that is changed according to the concentration of the substance 7 to be measured. Consequently, the concentration of the substance 7 to be measured can be determined from data showing the relationship between the total distance $\Delta y$ and the concentration of the substance 7 to be measured.

A fuel cell equipped with the above concentration measurement unit will now be described.

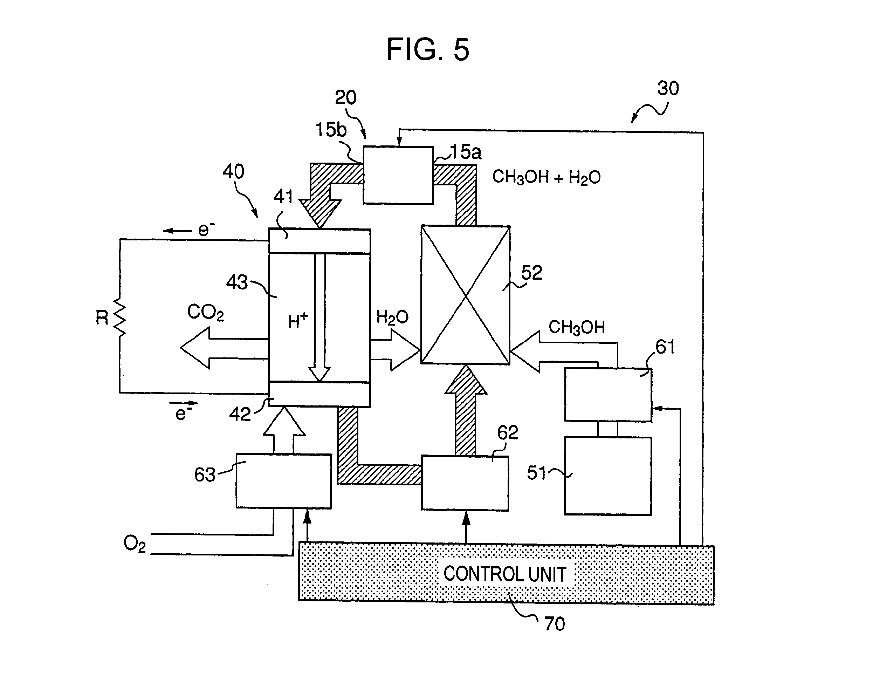

Fig. 5 is a block diagram showing a circulating system of a fuel cell equipped with the concentration measurement unit in Fig. 4. A fuel cell 30 shown in Fig. 5, which is a direct methanol fuel cell (DMFC), includes a system for supplying a fuel (an aqueous solution of methanol) by circulating the fuel centrally through a power generation unit 40.

The power generation unit 40 has a structure in which a plurality of cell units is stacked. Each of the cell units includes electrodes, i.e., an anode 41 and a cathode 42, and an electrolyte membrane (for example, a perfluorosulfonic acid-based ion-exchanging membrane) 43 composed of a solid polymer that conducts hydrogen ions ($H^+$), the electrolyte membrane being disposed between the electrodes.

A fuel tank 51 containing high-concentration methanol ($CH_3OH$) and a mixing tank 52 are provided outside of the power generation unit 40. A replenishing pump 61 is provided between the fuel tank 51 and an inlet portion of the mixing tank 52 so as to send the methanol from the fuel tank 51 to the mixing tank 52.

A circulating pump 62 is provided between the side of the cathode 42 of the power generation unit 40 and the inlet portion of the mixing tank 52. An outlet portion of the mixing tank 52 is connected to the side of the anode 41 of the power generation unit 40 via the concentration measurement unit 20. That is, the outlet portion of the mixing tank 52 is connected to the inflow port 15a of the concentration measurement unit 20 using a piping component such as a tube. Similarly, the outflow port 15b of the concentration measurement unit 20 is connected to the side of the anode 41 of the power generation unit 40.

The side of the cathode 42 of the power generation unit 40 is connected to the mixing tank 52 so as to supply water ($H_2O$) produced in the power generation unit 40 to the mixing tank 52. Furthermore, a feed pump 63 is connected to the side of the cathode 42 of the power generation unit 40 so that oxygen ($O_2$) serving as an oxidizing agent gas is supplied from the outside to the cathode 42.

The fuel cell 30 includes a control unit 70. Thereby, for example, the feed rate of a liquid or a gas fed from the replenishing pump 61, the circulating pump 62, the feed pump 63, or the like can be adjusted and, in addition, the concentration of the substance to be measured (aqueous solution of methanol) can be measured by determining the total distance $\Delta y$ from output data output from the photo detector 23 of the concentration measurement unit 20.

In the fuel cell 30, high-concentration methanol is fed from the fuel tank 51 to the mixing tank 52. Here, the feed rate is controlled by the auxiliary pump 61 that has received a command from the control unit 70. The mixing tank 52 collects residual methanol (low concentration) fed from the power generation unit 40 with the circulating pump 62, water also discharged from the power generation unit 40, and high-concentration methanol fed from the fuel tank 51. These are mixed in the mixing tank 52 so as to newly produce an aqueous solution of methanol ($CH_3OH + H_2O$) with a predetermined low concentration. The resulting aqueous solution of methanol is fed into the side of the anode 41 of the power generation unit 40 with the circulating pump 62.

During this step, the concentration measurement unit 20 measures the concentration of the aqueous solution of methanol and the output data detected in the concentration measurement unit 20 is then sent to the control unit 70. The control unit 70 determines the concentration of the aqueous solution of methanol, i.e., the substance 7 to be measured, the substance circulating in the path 15, from the output data by the method described above. When the measured concentration is less than a predetermined concentration, an output valve of the replenishing pump 61 is driven so as to be opened. Thus, control is performed so that the feed rate of the high-concentration methanol fed from the fuel tank 51 increases. On the other hand, when the concentration exceeds the predetermined concentration, the output valve of the replenishing pump 61 is driven so as to be closed. Thus, control is performed so that the feed rate of the high-concentration methanol decreases. Consequently, the aqueous solution of methanol fed from the mixing tank 52 can be constantly maintained so as to have a predetermined concentration.

In this manner, in the fuel cell 30, an aqueous solution of methanol being set to have a predetermined concentration is fed to the anode 41 of the power generation unit 40. Also, a predetermined amount of oxygen is supplied from the feed pump 63 regulated by the control unit 70 to the cathode 42 of the power generation unit 40.

In the anode 41 in the power generation unit 40, the methanol ($CH_3OH$) is reacted with water ($H_2O$) to generate hydrogen ions ($H^+$), electrons (e-), and carbon dioxide ($CO_2$). This reaction is generally represented by the following chemical formula:

$$CH_3OH + H_2O \rightarrow CO_2 + 6H + 6e$$

Here, when a load resistance R is connected between the anode 41 and the cathode 42, the electrons (e-) are moved to the cathode 42. Consequently, current flows in the load resistance R. The hydrogen ions ($H^+$) generated in the anode 41 are moved into the electrolyte membrane 43 to reach the cathode 42. At the cathode 42, the hydrogen ions ($H^+$) are bonded with the oxygen ($O_2$) supplied from the feed pump 63 and the electrons (e-) moved to the cathode 42 to generate water ($H_2O$). This reaction is generally represented by the following chemical formula:

$$3/2\ O_2 + 6H + 6e^- \rightarrow 3H_2O$$

The total reaction is generally represented by the following chemical formula:

$$CH_3OH + H_2O \rightarrow CO_2 + 3H_2O$$

The water ($H_2O$) generated at the cathode 42 is supplied to the mixing tank 52 and is reused as water for diluting the high-concentration methanol.

The residual methanol that is not used in the power generation unit 40 is again sent to the mixing tank 52 with the circulating pump 62, and is reused for producing an aqueous solution of methanol with a predetermined low concentration, which is sent to the anode 41 of the power generation unit 40.

The above fuel cell 30 can supply an aqueous solution of methanol with a constant concentration to the power generation unit 40, thus improving the power generation efficiency of the fuel cell and supplying a stable output voltage.

Furthermore, since high-concentration methanol can be used, the fuel tank, i.e., the overall fuel cell 30 can be reduced in size and in thickness, and the lifetime as a cell can be extended.

In the above embodiment, a case in which methanol, i.e., an organic fuel, is used as a substance to be measured has been described. However, the substance to be measured, the substance capable of being measured with the optical member for measuring a concentration or the concentration measurement unit of the present invention is not limited to organic fuels or methanol.

Industrial Applicability

As described above, the present invention can provide an optical member capable of measuring the concentration of a substance to be measured with high accuracy.

The optical member, a light-emitting element, and a photo detector are placed in a housing, thereby providing an integrated concentration measurement unit.

Furthermore, since the concentration of methanol can be maintained to be constant in a fuel cell equipped with the concentration measurement unit, the efficiency of power generation can be improved and a stable output voltage can be provided.

**Claims**

1. An optical member for measuring a concentration comprising:

   a path through which a substance to be measured passes; a first optical element including an incident surface on which light for inspection is incident and an emitting surface facing said path;
   a second optical element including an incident surface facing said path and an emitting surface from which the light is emitted; and
   magnifying means that magnifies a distance between an emitting optical axis of light transmitting through said first optical element, being refracted by the substance to be measured in said path and transmitting through said second optical element, and an incident optical axis of the light for inspection.

2. The optical member for measuring a concentration according to claim 1,
   wherein the magnifying means is diffraction means.

3. The optical member for measuring a concentration according to claim 1 or claim 2,
   wherein the magnifying means is provided so as to be integrated with the emitting surface of said second optical element.

4. The optical member for measuring a concentration according to claim 1 or claim 2,
   wherein the emitting surface of said first optical element and the emitting surface of said second optical element are parallel to each other and tilted with respect to the axial direction of the incident optical axis of the light for inspection.

5. The optical member for measuring a concentration according to claim 1 or claim 2,
   wherein a concave surface is provided so as to be integrated with the incident surface of said first optical element.

6. A concentration measurement unit including an optical member, the unit comprising:

   the optical member according to any one of claims 1 to 5,
   a light-emitting element for allowing light for inspection to be incident on the incident surface of said first optical element, and a photo detector for receiving the light transmitted through the magnifying means.

7. The concentration measurement unit according to claim 6,
   wherein an inflow port for supplying the substance to be measured to said path is provided at one end of said path formed between said first optical element and said second optical element, and an outflow port for discharging the substance to be measured from said path is provided at the other end.

8. A fuel cell including a concentration measurement unit,
   in which power is generated by a power generation unit including an anode, a cathode facing the anode, and an electrolyte membrane disposed therebetween; by supplying an organic fuel to the anode side; and by supplying an oxidizing agent gas to the cathode side,
wherein the organic fuel is supplied to the anode side via said path provided in the concentration measurement unit according to claim 6 or claim 7.

9.  The fuel cell including a concentration measurement unit according to claim 8,
    wherein the inflow port of the optical member is connected to a fuel tank of the organic fuel and the outflow port of the optical member is connected to the cathode side of the power generation unit.

# FIG. 1

# FIG. 2

CONCENTRATION OF METHANOL [wt%]

## FIG. 3

$| \overline{ab} | = w$

$| \overline{ab} | = w \cdot \tan \theta_1$

$| \overline{cb} | = w \cdot \tan \theta_2$

$| \overline{dc} | = | \overline{ab} | = | \overline{cb} | = w(\tan \theta_1 - \tan \theta_2)$

$\triangle y1 = | \overline{ec} | = | \overline{dc} | \cdot \cos \theta_1 = w(\tan \theta_1 - \tan \theta_2) \cdot \cos \theta_1$

# FIG. 4

EP 1 626 265 A1

## FIG. 5

<div align="center">INTERNATIONAL SEARCH REPORT</div>

| | International application No. |
|---|---|
| | PCT/JP2004/005736 |

**A. CLASSIFICATION OF SUBJECT MATTER**
Int.Cl$^7$ G01N21/05, H01M8/02, H01M8/04

According to International Patent Classification (IPC) or to both national classification and IPC

**B. FIELDS SEARCHED**

Minimum documentation searched (classification system followed by classification symbols)
Int.Cl$^7$ G01N21/00-21/61, H01M8/02, H01M8/04

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JICST FILE(JOIS)

**C. DOCUMENTS CONSIDERED TO BE RELEVANT**

| Category* | Citation of document, with indication, where appropriate, of the relevant passages | Relevant to claim No. |
|---|---|---|
| X<br>Y | Microfilm of the specification and drawings annexed to the request of Japanese Utility Model Application No. 136523/1987(Laid-open No. 40051/1989) (Nippon Columbia Co., Ltd.), 09 March, 1989 (09.03.89), Full text; Fig. 1 (Family: none) | 1,2,6,7<br>8,9 |
| X<br>Y | JP 58-63837 A (International Business Machines Corp.), 15 April, 1983 (15.04.83), Full text; Fig. 2 & US 4436420 A & EP 75653 A1 | 1,2,4,6,7<br>8,9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 May, 2004 (27.05.04) | 15 June, 2004 (15.06.04) |

| Name and mailing address of the ISA/<br>Japanese Patent Office | Authorized officer |
|---|---|
| Facsimile No. | Telephone No. |

Form PCT/ISA/210 (second sheet) (January 2004)

| | **INTERNATIONAL SEARCH REPORT** | International application No. |
|---|---|---|
| | | PCT/JP2004/005736 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-511833 A   (Siemens AG.),<br>25 March, 2003 (25.03.03),<br>Full text<br>& WO 01/28021 A1        & EP 1222705 A1<br>& DE 19948908 A1        & US 2002-0148284 A1 | 8,9 |
| A | JP 7-286957 A  (Carl Zeiss Jena GmbH.),<br>31 October, 1995 (31.10.95),<br>Full text; Figs. 1 to 2<br>& DE 4223840 A          & FR 2693796 A<br>& GB 2269667 A          & US 5347358 A | 1-7 |
| A | JP 6-174639 A  (Kabushiki Kaisha Soma Kogaku),<br>24 June, 1994 (24.06.94),<br>Full text; Figs. 1 to 2<br>(Family: none) | 1-7 |

Form PCT/ISA/210 (continuation of second sheet) (January 2004)